# FASCICULE DE BREVET EUROPEEN

(11) **EP 4 649 808 B1**
(45) Date de publication et mention de la délivrance du brevet: **14.10.2026**
(21) Numéro de dépôt: 25175805.8
(22) Date de dépôt: 12.05.2025
(51) Int. Cl.: A01C 23/00

(54) **RÉPARTITEUR À OUVERTURE RAPIDE**
SCHNELLÖFFNENDER VERTEILER
QUICK-RELEASE DISTRIBUTOR

(30) Priorité: 16.05.2024 BE 202405284
(43) Date de publication de la demande: 19.11.2025
(73) Titulaire: Ets JOSKIN S.A., 4630 Soumagne (BE)
(72) Inventeur: JOSKIN, Victor, 4633 MELEN (SOUMAGNE) (BE)
(74) Mandataire: AWA Benelux

(56) Documents cités:
- EP-A1- 4 241 551
- DE-U1- 202020 107 208
- FR-A1- 2 851 482
- US-A1- 2021 060 574

## Description

### Objet de l'invention

La présente invention se rapporte à un répartiteur de substances liquides ou visqueuses, en particulier d'effluents d'élevage, provenant d'une conduite-mère alimentée par un réservoir de stockage, par exemple une tonne à lisier, vers une pluralité de conduites secondaires, telles que celles menant à des buses d'épandage permettant de répandre lesdites substances sur ou dans le sol.

La présente invention concerne plus précisément un répartiteur dont l'accès aux organes opératifs est facilité, permettant par exemple un échange rapide des couteaux et contre-couteaux.

### Etat de la technique

On connaît de nombreuses variantes de dispositifs de distribution pour liquides contenant des solides, utilisés notamment dans le secteur de la mécanisation agricole où ils sont connus sous le vocable de « répartiteurs de lisier ». Le lisier contient des corps étrangers solides ou fibreux tels que résidus de paille, terre, bois, etc., qu'il est nécessaire de réduire avant leur passage dans les conduites secondaires en sortie du répartiteur.

Le document FR2325312 propose de réduire ces corps étrangers en faisant passer le lisier dans un corps circulaire au travers d'une plaque munie d'orifices, servant de contre-couteau, sur laquelle tourne une lame de coupe permettant, lors de son passage sur lesdits orifices, de guillotiner les corps risquant de les obstruer. Le lisier est ensuite évacué par une ou plusieurs conduites secondaires. Ce dispositif manque d'efficacité sur les corps mous et souples quasiment toujours compris dans les effluents agricoles.

Le document EP0520974 propose une amélioration par son dispositif dit « de coupe ciseaux » mettant en œuvre une pluralité de petits couteaux circulaires à rotation axiale libre entraînée par leur frottement sur un contre-couteau doté d'orifices d'évacuation. Le frottement est généré par la rotation du disque qui supporte et comprime les couteaux contre le contre-couteau qui est disposé de manière coaxiale. La rotation des couteaux sur eux-mêmes, en même temps qu'ils progressent le long de l'arête des orifices du contre-couteau sous l'action de rotation du disque support, crée la coupe ciseaux.

Les dispositifs décrits aux deux paragraphes précédents représentent les dispositifs de coupe fondamentaux équipant les répartiteurs de lisier contemporains. L'un comme l'autre sont soumis à l'usure née du frottement du ou des couteaux sur le contre-couteau. Ceux-ci proposent également de régler le débit de distribution en faisant varier le diamètre des orifices du contre-couteau. En cas d'usure ou de volonté de modifier le débit, il est donc nécessaire d'ouvrir le corps du répartiteur et de démonter le disque support de couteau(x) pour pouvoir accéder au(x) couteau(x) et au(x) contre-couteau(x).

Le fait de devoir intervenir sur les composants internes du répartiteur dans ces deux situations, à savoir lorsqu'on désire changer les contre-couteaux pour faire varier le débit d'épandage en les remplaçant par un modèle alternatif présentant des orifices de passage aux caractéristiques dimensionnelles différentes, et lors des opérations d'entretiens périodiques, de maintenance ou de service après-vente, peuvent représenter un coût à la fois temporel et financier non négligeable pour l'exploitant.

Sur les dispositifs décrits ci-avant, les conduites secondaires sont toutes agencées sur une seule face circulaire du corps de répartiteur. L'opération d'échange des couteaux et/ou des contre-couteaux s'effectue donc de manière relativement aisée en ouvrant l'autre face circulaire du corps de répartiteur, à savoir celle qui ne comprend pas de conduites secondaires.

Cependant, l'opération se complique pour les répartiteurs contemporains qui, pour alimenter des outils d'épandage de grande largeur, agencent des conduites secondaires sur leurs deux faces circulaires et, par conséquent, dédoublent le dispositif de coupe. Un exemple d'un tel répartiteur est décrit dans le document EP0638227.

Ce type dispositif « double face » comprend également une face ouvrante sur le corps circulaire, ce qui permet d'ouvrir le corps circulaire du répartiteur pour changer les couteaux ou modifier le débit. Néanmoins, cette ouverture est plus compliquée que sur les répartiteurs « simple face » par l'encombrement et la masse des conduites secondaires agencées sur la face ouvrante. Et surtout, pour atteindre le(s) couteau(x) et contre-couteau(x) disposés contre l'autre face du corps du répartiteur, il faut extraire tous les organes internes de ce dernier.

Le document EP3175696 A1 concerne un tel répartiteur « double face ». Après ouverture de la face circulaire du corps du répartiteur comportant la conduite-mère et une pluralité de conduites secondaires, il est permis d'extraire un à un, parfois au prix d'une opération de dévissage, les éléments du système de coupe, à savoir le premier contre-couteau, le porte-couteau muni de ses couteaux et enfin le second contre-couteau. Il est en outre souvent nécessaire, pour l'ouverture ou la dépose de la face circulaire ouvrante du répartiteur, de désolidariser de multiples connections vers les buses d'épandage, avec les inconvénients supplémentaires de salissures que cela entraîne.

L'opération étant particulièrement fastidieuse, l'homme du métier a cherché à faciliter l'accès aux composants internes du répartiteur.

Une solution est divulguée dans le document EP3897091 A1, qui décrit un corps de répartiteur possédant sur sa face cylindrique au moins une ouverture de service autorisant le passage de l'ensemble du rotor de coupe. Après dépose de cette ouverture, il faut d'abord dévisser la vis qui solidarise le rotor axialement avec le moteur d'entraînement, les trois vis qui le solidarisent avec un palier intermédiaire et les excentriques du dispositif de ressorts qui compriment les couteaux contre les contre-couteaux. Le rotor de coupe incluant les couteaux est alors extrait après quoi les contre-couteaux peuvent être simplement déposés à leur tour. Pour échanger les couteaux par contre, ceux-ci étant disposés en arête du rotor, il faut d'abord démonter leur support puis dévisser les trois vis qui maintiennent chaque couteau.

L'opération pour changer les couteaux de ce document est moins lourde en ce qu'elle ne nécessite pas d'ouvrir ou déposer une lourde face circulaire du corps de répartiteur mais elle n'en reste pas moins fastidieuse, a fortiori dans un environnement sale et confiné.

Additionnellement, la présence de la mécanique interne relativement encombrante du rotor et de son dispositif de compression réduit la faculté d'utilisation de l'ouverture latérale pour l'élimination d'éventuels bourrages. Les opérations routinières de réglage, maintenance et d'entretien s'en retrouvent dès lors considérablement alourdies.

De manière similaire, les documents DE 20 2020107208 U1 et EP4 241 551 A1 trouvent fastidieuses les opérations de l'état antérieur visant à retirer le noyau du répartiteur pour effectuer la maintenance du répartiteur, qu'il s'agisse de retirer des corps étrangers, d'accéder aux couteaux pour leur entretien ou de remplacer les contre-couteaux « qui définissent le flux de lisier ». Ils proposent également l'un et l'autre d'accéder au noyau du répartiteur via une trappe latérale, le second proposant en outre un dispositif d'assistance permettant tantôt de comprimer le noyau pour l'extraire du répartiteur, tantôt de l'écarteler après remise en place pour presser les couteaux contre les contre-couteaux.

### Buts de l'invention

La présente invention a pour but de fournir un répartiteur de substances liquides ou visqueuses, en particulier d'effluents d'élevage génériquement dénommés « lisier » dans la suite du présent document, combinant une conception simple et peu coûteuse du point de vue de la fabrication, du montage, de la maintenance et du service à l'usage, un design compact compatible avec des équipements d'épandage de très grande largeur, et une grande flexibilité de modulation du débit.

L'enjeu du répartiteur selon la présente invention est de simplifier l'accès aux composants internes du répartiteur en vue de réduire l'impact de ces opérations sur la productivité de l'équipement.

Un autre but du répartiteur de la présente invention, grâce à sa conception particulière, est d'offrir un rotor de coupe compact, offrant l'avantage d'un volume parfaitement dégagé avec peu d'obstacles et de recoins dans lesquels les impuretés et corps étrangers peuvent se loger et se coincer.

### Brève description de l'invention

Selon l'invention, le but précité est atteint au moyen d'un dispositif selon la revendication 1.

Le répartiteur selon la présente invention est composé essentiellement d'un corps constitué d'une section cylindrique fermée de part et d'autre par deux flasques latérales circulaires boulonnées et d'un organe de coupe rotatif interne. Le corps comporte deux écoutilles de service et une bouche d'alimentation disposées sur la face cylindrique, et diffuse le lisier à travers une série de bouches périphériques disposées sur les flasques latérales. Le principe de coupe de l'organe rotatif interne est celui du document EP0520974 appliqué vers les deux faces planes du corps. A cet effet, un dispositif de pression est intégré dans l'arbre central d'entraînement de sorte que les couteaux soient uniformément comprimés sur les contre-couteaux de chaque face. Les contre-couteaux sont constitués de deux demi-disques assemblés par simple emboîtement de tenons et mortaises réciproques disposés sur la tranche rectiligne des demi-disques.

Pour atteindre le but de l'invention, il est conçu des flasques qui peuvent être désolidarisés du corps sans devoir les enlever complètement du répartiteur, afin d'éviter de devoir les déposer au sol. De fait, après avoir enlevé les boulons de fermeture, chaque flasque peut être écartée indépendamment par coulissement, éventuellement sur un dispositif de glissières, jusqu'à butées d'un dispositif limiteur d'écartement, libérant ainsi entre le corps et la flasque un espace de quelques centimètres suffisant pour effectuer les opérations de maintenance/remplacement des couteaux et/ou contre-couteaux sans nécessiter de démontage complet. À cet effet, l'arbre de transmission du rotor de coupe interne, supporté par les deux flasques, est d'une longueur telle que le déplacement axial des flasques est autorisé sans que l'arbre ne sorte de ses paliers et le dispositif de pression intégré à l'arbre central est doté d'un dispositif de neutralisation de la pression accessible par les écoutilles.

Via l'espace ainsi ménagé entre les flasques et le corps du répartiteur, les couteaux peuvent être extraits du répartiteur ou y être insérés, soit purement manuellement sans outil spécifique, soit à l'aide d'un outillage de manutention spécialement conçu très étroit ; les contre-couteaux peuvent être extraits en désolidarisant chaque demi disque qui les compose par le côté correspondant du répartiteur sans avoir à libérer une extrémité de l'arbre central ; et inversement, les contre-couteaux peuvent être introduits en insérant chaque demi disque qui les compose par le côté correspondant du répartiteur pour les enficher l'un dans l'autre autour de l'arbre central.

Les opérations de réglage de débit par changement de contre-couteaux, de maintenance, de réparation ou de service après-vente ne requièrent dès lors plus de manutention de composants lourds ni de mécanique en milieu sale et confiné, et il en résulte une diminution significative du temps d'intervention sur le répartiteur.

L'entretien journalier du répartiteur peut également être facilité par l'intégration par exemple sur chaque flasque d'un orifice de nettoyage doté d'un raccord rapide pour tuyau d'arrosage. On peut ainsi injecter de l'eau pour rincer les bouches de sortie et les tuyaux auxquels elles sont connectées. De même, les deux écoutilles procurent un accès aisé à l'intérieur du corps sans devoir procéder au démontage des flasques pour effectuer le nettoyage du répartiteur, résultant en un gain de productivité de l'appareil.

L'ensemble de ce dispositif est compris dans un volume particulièrement compact, donc particulièrement avantageux pour l'intégration sur des machines d'épandage de lisier de grande largeur.

### Principaux éléments caractéristiques de l'invention

Un premier aspect de la présente invention se rapporte à un répartiteur de lisier comprenant :
- un corps de répartiteur comprenant une section cylindrique à bases ouvertes;
- deux flasques de fermeture fixées de manière amovible au corps de répartiteur pour fermer ledit corps en obturant les bases de la section cylindrique,
- un rotor de coupe situé à l'intérieur du corps entre les flasques de fermeture, un arbre de transmission et deux porte-couteaux disposés dos à dos, supportant, en utilisation, des couteaux qu'ils compriment sur deux contre-couteaux adossés aux flasques de fermeture à l'intérieur du corps de répartiteur;
- un dispositif de pression permettant de repousser, en utilisation, les deux porte-couteaux vers les flasques de fermeture en les écartant l'un de l'autre, en ce que les porte-couteaux comportent des ancrages pouvant accueillir
- un dispositif de neutralisation de pression permettant, lors de son utilisation, de neutraliser le dispositif de pression, ledit dispositif de neutralisation étant accueilli dans des ancrages prévus sur les porte-couteaux ;
un ou plusieurs limiteurs d'écartement maintenant les flasques de fermeture, lorsqu'elles sont en position disjointe du corps du répartiteur, à un faible écart de celui-ci créant un accès aux contre-couteaux et aux couteaux pour les insérer ou les extraire via cet accès sans devoir détacher complètement les flasques de fermeture du corps du répartiteur.

Selon des formes d'exécution préférées de l'invention, le répartiteur comprend en outre l'une des caractéristiques suivantes, ou une combinaison appropriée de celles-ci :
- la section cylindrique comprend une, préférablement deux, ouverture(s) latérale(s) couvertes de plaques d'écoutilles, permettant d'accéder à l'intérieur du corps de répartiteur pour placer le dispositif de neutralisation de pression ;
- chaque contre-couteaux est composé de deux demi-disques assemblés l'un à l'autre au moyen d'un assemblage de type amovible sans outil de sorte que chaque demi-disque peut être inséré dans, respectivement extrait du répartiteur et engagé autour, respectivement dégagé du rotor de coupe via l'accès ménagé entre le corps du répartiteur et les flasques de fermeture ;
- le porte-couteaux est formé d'un anneau étoilé muni d'un dispositif d'entraînement radial doté d'un orifice central crénelé et dont chaque branche est percée d'un orifice enserré par un épaulement autour duquel un couteau peut s'enficher et tourner librement sur lui-même, d'un capot de répartition épousant la forme de l'anneau et fixé à ce dernier, de sorte que, en utilisation, la substance à répartir s'écoule entre le capot de répartition et l'anneau étoilé vers les orifices de ce dernier ;
- le dispositif d'entraînement du rotor de coupe est constitué de deux manchons reliés entre eux par un arbre de transmission s'insérant dans un alésage pratiqué dans la base du manchon et autour duquel est disposé le dispositif de pression, les manchons comprenant en outre un épaulement crénelé épousant la forme de l'orifice central des porte-couteaux ;
- chaque flasque présente un orifice central sur lequel est apposé un palier pour accueillir les deux extrémités du rotor de coupe ;
- le dispositif d'entraînement du rotor de coupe est d'une longueur suffisante pour rester engagé dans ses paliers lorsque les flasques sont en position disjointe du corps de répartiteur ;
- le dispositif de neutralisation de pression est constitué de deux fixations par vis reliant deux paires de fourchettes de neutralisation de pression agencées sur la périphérie des deux porte-couteaux ;
- chaque contre-couteaux est percé d'un ou plusieurs orifices de guidage et chaque flasque de fermeture est munie d'un ou plusieurs détrompeurs correspondants aux orifices de guidage et s'insérant dans ceux-ci ;
- chaque flasque de fermeture est munie d'une ou plusieurs bouches d'admission de gaz et chaque contre-couteaux est percé d'autant d'orifices d'admission correspondants dirigeant, en utilisation, le gaz dans la partie creuse du porte-couteaux, entre l'anneau et l'orifice central ;
- chaque flasque de fermeture est munie d'un ou plusieurs orifices de rinçage pouvant être muni d'un raccord quelconque et chaque contre-couteaux est percé d'autant d'orifices de rinçage correspondants dirigeant, en utilisation, un flux liquide dans la partie creuse du porte-couteaux, entre l'anneau et l'orifice central ;
- le répartiteur comprend un dispositif de glissières pour assister le coulissement de chaque flasque de manière indépendante jusqu'à une butée ;
- le corps de répartiteur comprend des épaulements sur chacun des bords de la section cylindrique, lesdits épaulements débordant substantiellement perpendiculairement par rapport à la section cylindrique et vers l'extérieur de celle-ci, et les épaulements de la section cylindrique sont munis d'une pluralité d'orifices de fixation afin de permettre la fixation amovible des flasques de fermeture sur le corps de répartiteur, les épaulements comprenant une pluralité d'orifices d'écartement pour recevoir les limiteurs d'écartement réglés pour limiter l'écartement des flasques par rapport au corps.

Un autre aspect de l'invention se rapporte à un outil d'épandage comprenant le répartiteur de lisier selon l'invention.

Un autre aspect de l'invention concerne le procédé de dépose et remplacement d'organes internes tels que le contre-couteau et les couteaux d'un répartiteur selon l'invention.

### Brève description des figures

La Figure 1 montre une vue éclatée des principaux composants d'un exemple de répartiteur selon l'invention.
La Figure 2 montre une vue éclatée du corps d'un exemple de répartiteur selon l'invention.
Les Figures 3A et 3B montrent une flasque de fermeture d'un exemple de répartiteur selon l'invention, représenté à la fois en vue en plan (Figure 3A) et en vue isométrique (Figure 3B).
Les Figures 4A et 4B montrent un rotor de coupe d'un exemple de répartiteur selon l'invention, représenté à la fois en vue isométrique (Figure 4A) et en vue éclatée (Figure 4B)
La Figure 5 montre une vue éclatée d'un porte-couteaux d'un rotor de coupe d'un exemple de répartiteur selon l'invention.
Les Figures 6A et 6B représentent un contre-couteau d'un exemple de répartiteur selon l'invention.
La Figure 7 montre une vue isométrique partiellement écorchée d'un exemple de répartiteur selon l'invention.
Les Figures 8A et 8B représentent le processus d'ouverture limitée d'un exemple de répartiteur selon l'invention décomposé en deux étapes.
La Figure 9 représente le processus d'extraction d'un contre-couteau d'un exemple de répartiteur selon l'invention.
La Figure 10 représente le processus d'extraction de couteaux d'un exemple de répartiteur selon l'invention.

### Description d'une forme d'exécution préférée de l'invention

La présente invention concerne un répartiteur à ouverture améliorée. Un exemple de répartiteur selon la présente invention est illustré sur les différentes figures.

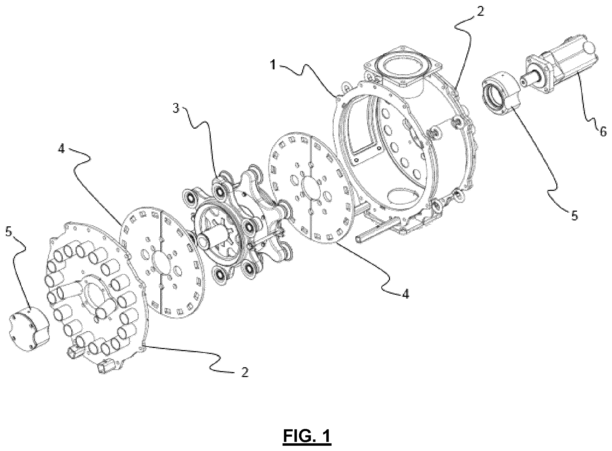

Comme représenté sur la Figure 1, le répartiteur comprend un corps de répartiteur 1 et deux flasques de fermeture 2 pour fermer le corps 1. Un rotor de coupe 3 ainsi que deux contre-couteaux 4 sont situés à l'intérieur du corps du répartiteur 1. Lors de l'utilisation, le rotor de coupe 3 sera mis en rotation à l'aide d'un organe de puissance quelconque 6 doté d'un arbre d'entraînement maintenu par deux paliers 5. L'organe de puissance quelconque 6 est par exemple un moteur hydraulique alimenté en huile par un engin externe, par exemple un tracteur agricole.

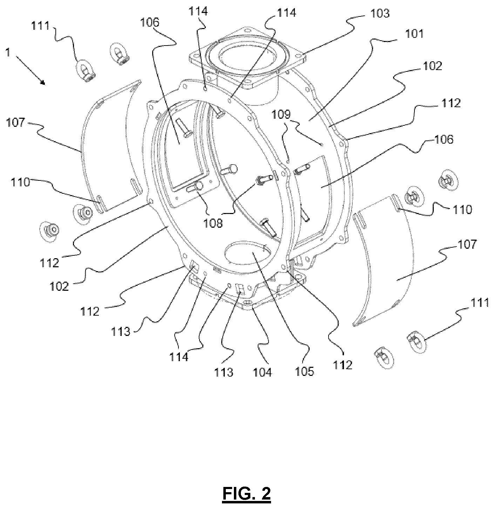

Le corps de répartiteur 1 est lui-même illustré en vue éclatée sur la Figure 2. Celui-ci est constitué d'une section cylindrique 101, dont les bases sont ouvertes, et dont la hauteur est de préférence plus petite que le diamètre. En utilisation, la section cylindrique est positionnée de sorte que la hauteur est orientée dans un plan tendant de préférence à l'horizontale comme illustré sur les différentes figures. Les flasques 2 sont fixées sur le corps 1, de manière amovible. Le corps de répartiteur 1 peut être doté d'épaulements 102 sur chacun des bords de la section cylindrique 101, débordant perpendiculairement par rapport à la section cylindrique 101 et vers l'extérieur de celle-ci, pour faciliter la fixation des flasques 2. Par ailleurs, le corps répartiteur 1 comprend une bouche d'alimentation 103 située de préférence sur la partie supérieure de la section cylindrique 101, et un socle de fixation 104 situé de préférence sur la partie inférieure de la section cylindrique 101 et abritant un orifice de vidange 105. Le corps de répartiteur 1 comprend également une ou préférablement deux ouvertures latérales 106 couvertes par les plaques d'écoutilles 107, ces ouvertures latérales permettant l'accès à l'intérieur du corps de répartiteur 1. Ces ouvertures latérales 106 sont situées de préférence sur le contour de la section cylindrique 101. Les plaques d'écoutilles 107 peuvent être fixées au moyen d'écrous 111 et de boulons d'écoutille 108 s'insérant dans des perçages d'écoutille 109 prévus dans la section cylindrique 101 et des échancrures 110 des plaques d'écoutilles 107.

Les épaulements 102 de la section cylindrique 101 sont munis d'une pluralité d'orifices de fixation 112 afin de permettre la fixation amovible des flasques de fermeture 2 sur le corps 1, ces orifices étant de préférence situés sur des oreilles en débordement des épaulements 102. Les épaulements peuvent également comprendre un ou plusieurs orifices de guidage 113, ainsi qu'une pluralité d'orifices d'écartement 114 qui accueilleront des limiteurs d'écartement 8 (voir ci-dessous) réglés pour arrêter l'écartement des flasques 2 par rapport au corps cylindrique 1, à une faible distance suffisante pour ménager l'accès de la main ou d'un outil étroit pour y passer l'épaisseur du contre-couteau 4.

En utilisation, la bouche d'alimentation de lisier 103 est usuellement branchée à une conduite (non représentée) alimentant le répartiteur 1 en lisier depuis un réservoir (non représenté). Le socle de fixation 104 peut être ancré au moyen d'une liaison mécanique sur un support quelconque du dispositif que le répartiteur est chargé d'alimenter, par exemple un outil d'épandage de précision quelconque (non représenté). L'orifice de vidange 105 sera obturé d'une manière quelconque connue de l'homme de l'art.

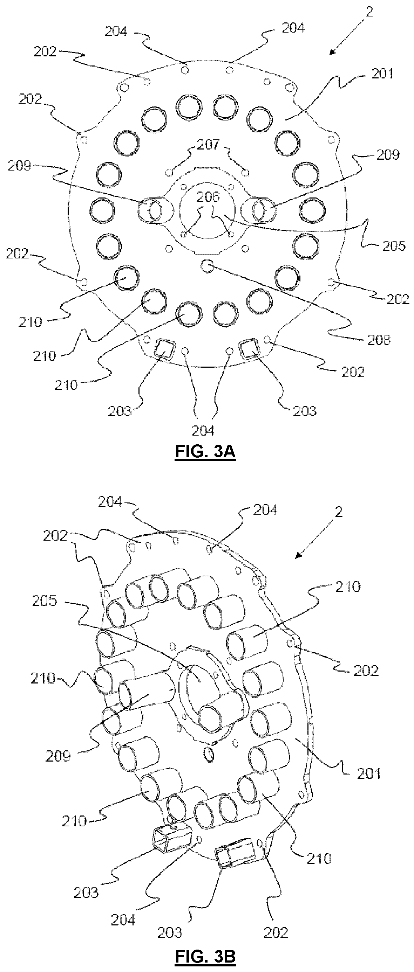

Un exemple de flasques de fermeture 2, qui peuvent être identiques par facilité, est illustré aux Figures 3A et 3B. Les flasques de fermeture 2 sont fixées de manière amovible au corps de répartiteur 1 et les deux flasques peuvent passer d'une position de fermeture, dans laquelle les flasques 2 sont fixées au corps de répartiteur 1, à une position d'ouverture, dans laquelle les flasques 2 sont complètement détachées du corps de répartiteur 1. Les flasques 2 de la présente invention ont la particularité de pouvoir également passer à une position intermédiaire disjointe dans laquelle les flasques 2 sont juste écartées du corps de répartiteur 1, à une distance suffisante nécessaire pour passer l'épaisseur d'un couteau ou d'un contre-couteau, sans devoir être complètement détachées du corps de répartiteur 1 comme c'est le cas dans la position d'ouverture. Chaque flasque de fermeture 2 a une géométrie similaire à celles des bases ouvertes de la section cylindrique 101, en tenant compte des épaulements 102 s'ils sont présents. Chaque flasque de fermeture 2 est constituée d'une plaque 201 en matériau résistant, de forme sensiblement circulaire épousant le contour du corps de répartiteur 1, afin de fermer la section cylindrique 101 du corps de répartiteur 1. Les flasques 2 comprennent, de manière similaire au corps de répartiteur 1, des orifices de fixation 202, des orifices de guidage 203, éventuellement dotés d'un manchon assemblé, et des orifices d'écartement 204 correspondant respectivement aux orifices de fixation 112, aux orifices de guidage 113 et aux orifices d'écartement 114 du corps de répartiteur 1. Les flasques de fermeture 2 sont fixées sur le corps de répartiteur 1 au moyen d'un assemblage mécanique quelconque facilement détachable passant respectivement au travers des orifices de fixation 112 et 202.

Chaque plaque de flasque 201 présente un orifice central 205 permettant d'accueillir une extrémité du rotor de coupe 3. Autour de cet orifice central 205 se trouvent une série d'orifices de fixation de palier 206, une série d'orifices de fixation de contre-couteau 207, un orifice de rinçage 208, ainsi que deux orifices de diamètre plus important sur lesquels sont assemblés autant de manchons servant de bouches d'admission 209. La plaque de flasque 201 comporte en outre dans sa périphérie une pluralité de bouches de sortie du lisier 210.

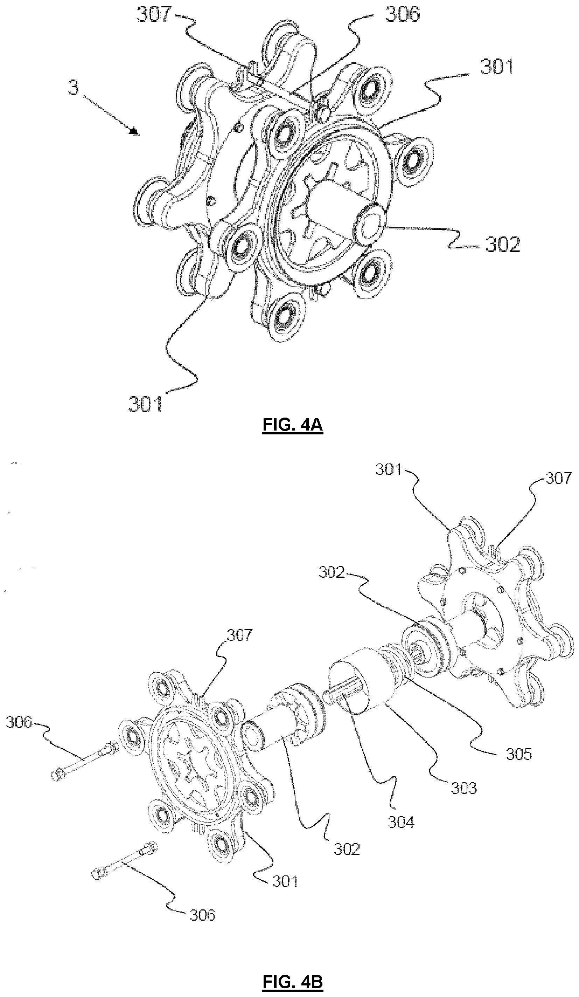

Le rotor de coupe 3 inséré dans le corps de répartiteur 1 entre les flasques de fermeture 2 est illustré en vue isométrique en Figure 4A et en vue éclatée en Figure 4B. Il est composé de deux porte-couteaux 301 agencés dos-à-dos et munis chacun d'un orifice central, dans ce cas en forme d'étoile, dans lequel s'insèrent deux manchons d'engrenage 302. Ces derniers sont destinés à recevoir l'arbre de transmission 304 du rotor autour duquel est agencé un ressort de pression 305 dont le rôle est de repousser les deux porte-couteaux 301 en les écartant l'un de l'autre. Chaque manchon 302 est de préférence cylindrique et comprend une base proximale et un corps distal, la base étant préférablement élargie par rapport au corps du manchon. Les deux bases des manchons d'engrenage 302 comprennent chacun un épaulement crénelé qui épouse la forme de l'orifice central des porte-couteaux 301. Les bases sont percées d'un alésage destiné à recevoir l'arbre de transmission 304 du rotor. Comme représenté sur la Figure 4B, les bases se font face au sein d'une chambre de liaison 303 de forme avantageusement cylindrique. Dans cette chambre, les bases des manchons d'engrenage 302 sont liées par l'arbre de transmission 304 de forme appropriée. Autour de l'arbre de transmission 304 est agencé un ressort de pression 305, de type et forme idoines, dont le rôle est de repousser les deux porte-couteaux 301 en les écartant l'un de l'autre. Dès lors, le rotor de coupe 3 est conçu pour accueillir un dispositif de neutralisation de pression 306. Ce dispositif permet de retenir le ressort 305 afin que les porte-couteaux 301 soient maintenus à une distance fixe désirée, offrant l'espace nécessaire pour écarter les flasques 2 du corps 1 de répartiteur permettant d'effectuer l'assemblage, le montage, le service et la maintenance du rotor 3, mais qui est enlevé lorsque le répartiteur est en configuration de fonctionnement. Ce dispositif de neutralisation de pression 306 est donc placé sur le rotor de coupe 3 uniquement lorsque le répartiteur n'est pas en configuration de fonctionnement. Le dispositif de neutralisation de pression 306 est réalisé par un dispositif de fixation simple, de préférence par vis, dans cet exemple de réalisation, constitué de deux paires d'écrous et boulons reliant deux paires de fourchettes 307 de neutralisation de pression agencées en périphérie des porte-couteaux 301.

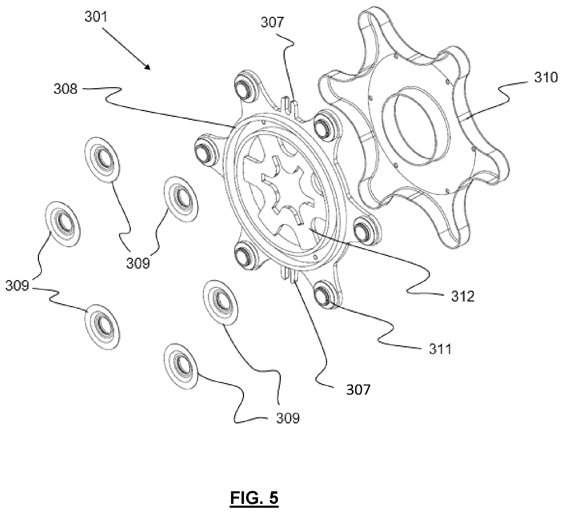

La Figure 5 illustre un exemple de porte-couteaux 301. Chaque porte-couteaux 301 est composé de l'assemblage d'un anneau étoilé 308 et d'un capot de répartition 310, de préférence concave, épousant la forme de l'anneau 308. Chaque porte-couteaux 301 est apte à supporter un nombre de couteaux 309 percés équivalent au nombre de branches de l'anneau 308. Chaque branche de l'anneau étoilé 308 comprend un large orifice dont le pourtour présente un épaulement 311 sur la face recevant un couteau 309, de préférence circulaire, lequel se loge simplement autour de l'épaulement 311. Le centre de l'anneau étoilé 308 est préférablement occupé par un dispositif d'entraînement radial (par exemple une jante) 312 comprenant un orifice de géométrie similaire à l'épaulement crénelé du manchon d'engrenage 302, à savoir dans ce cas une étoile. De cette manière, la base du manchon d'engrenage 302 peut s'insérer dans l'orifice central du capot de répartition 310 et son épaulement crénelé peut s'insérer dans l'orifice central de la jante 312. Les espaces vides entre les bâtons de la jante 312 ménagent un passage vers le capot de répartition 310 et de là, vers les orifices des branches de l'anneau étoilé 308 puis vers l'orifice des couteaux 309.

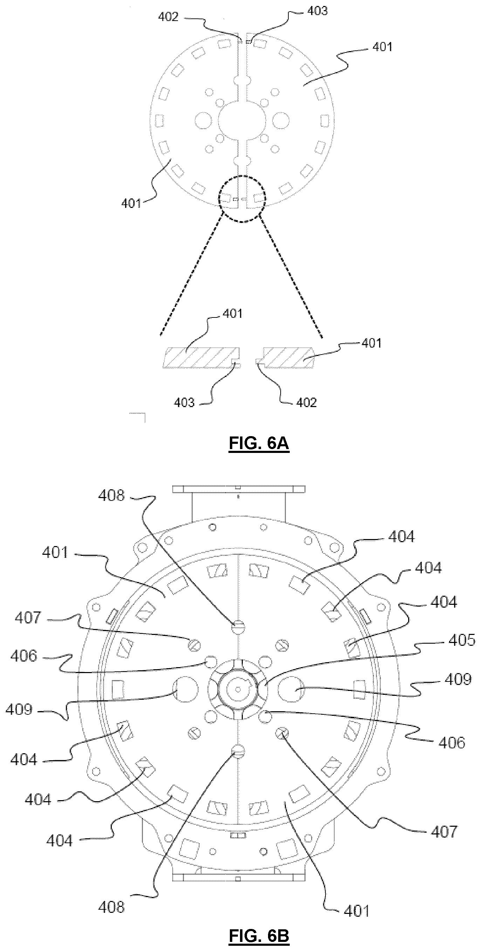

Un contre-couteau 4 est illustré en Figure 6A, et est composé de deux demi-disques 401 assemblés l'un à l'autre au moyen d'un assemblage de type amovible sans outil. L'assemblage peut par exemple se faire au moyen de fins ergots s'insérant dans un étroit orifice correspondant, les deux étant disposés sur la tranche des demi-disques (401) (par exemple un dispositif de tenon 402 et de mortaise 403, créant une sorte de profil d'assemblage à recouvrement à sifflet comme détaillé dans la loupe de la figure 6A). Un dispositif alternatif serait par exemple un assemblage à queue d'aronde, à contre-profil ou par emboîtement comme les pièces d'un puzzle ou autre profil d'assemblage à rainure(s) et languette(s). Les demi-disques sont garnis, à l'approche de leur périphérie circulaire, d'orifices de distribution 404 correspondant aux bouches de sortie 210 des flasques de fermeture 2.

Une fois les deux demi-disques 401 assemblés comme présenté en Figure 6B, le contre-couteau 4 présente à son tour un orifice central 405 bordé d'orifices de fixation de palier 406, d'orifices de fixation de contre-couteau 407, d'orifices de rinçage 408, et d'orifices d'admission 409, correspondant respectivement à l'orifice central 205, la série d'orifices de fixation de palier 206, la série d'orifices de fixation de contre-couteau 207, l'orifice de rinçage 208, et les bouches d'admission 209 de la plaque de flasque 201.

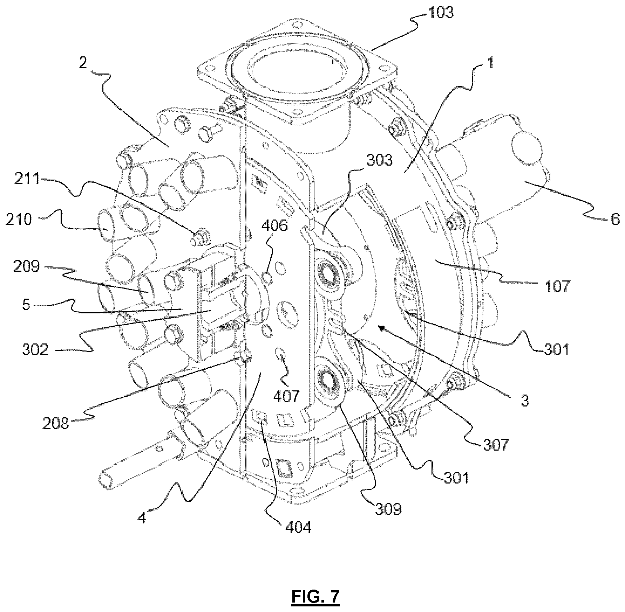

La Figure 7 illustre le répartiteur selon l'invention avec l'ensemble des éléments assemblés, une coupe partielle est réalisée dans le corps 1 afin de voir l'agencement intérieur lors du fonctionnement. Les flasques 2 enserrent la section cylindrique 101 et l'ensemble renferme le rotor de coupe 3. Les corps des manchons d'engrenage 302 sont insérés à travers les flasques 2 dans le palier 5, l'un de ceux-ci étant à son tour engagé autour de l'arbre de sortie de l'organe de puissance 6. Les paliers 5 sont fixés au moyen d'un assemblage mécanique à la flasque 2 correspondante, la tête d'assemblage côté intérieur de la flasque 2 se logeant dans l'orifice de fixation de palier 406 correspondant du contre-couteau 4.

Les contre-couteaux 4 sont simplement posés contre la face intérieure des flasques 2 dans lesquelles des détrompeurs (dans ce cas, des tourillons-guides) 211 sont fixés à travers les orifices de fixation de contre-couteaux 207, s'agissant par exemple de boulons à tête cylindrique enserrés sur la flasque 2 au moyen d'un écrou. Les contre-couteaux 4 sont ainsi apposés en glissant leurs orifices de fixation 407 sur les tourillons-guides correspondants 211. Dès lors que, comme représenté sur cette figure 7, les dispositifs de neutralisation 306 ne retiennent pas les fourchettes de neutralisation 307, les deux porte-couteaux 301 du rotor de coupe 3 sont poussés vers les flasques 2. Cette poussée comprime uniformément les couteaux circulaires 309 contre les contre-couteaux 4 qui sont eux-mêmes comprimés contre les flasques 2. La mise en rotation du rotor de coupe 3 par l'organe de puissance 6 entraîne la révolution ou rotation en sens inverse des couteaux 309 à cause de leur frottement sur le contre-couteau 4. Lorsque les couteaux 309 passent le long de l'arête d'un orifice de distribution 404, leur révolution exécute une action de coupe à la manière d'une paire de ciseaux entre l'arête de l'orifice de distribution 404 et le bord tranchant du couteau 309 qui se déroule le long de l'arête. Ainsi, on recrée la « coupe ciseaux » divulguée par le brevet EP0520974.

Le répartiteur est de type volumétrique : la chambre constituée de la section cylindrique 1 fermée par les flasques 2 se remplit de lisier par la bouche d'alimentation 103 et le flux d'alimentation pousse le lisier à travers les bouches de sortie 210. Ces dernières sont successivement obturées par le passage des couteaux 309 qui cisaillent à ce moment les éventuels corps étrangers solides ou fibreux tels que résidus de paille, terre, bois, etc. qui peuvent s'y trouver coincés. Au même moment, le gaz qui est aspiré par la ou les bouches 209, par exemple de l'air ambiant, et qui transite à travers le porte-couteaux 301 est propulsé à travers l'orifice des couteaux 309. Ainsi, on réduit ou évite le phénomène de pulsation dû à l'ouverture/fermeture successive des bouches de sortie 210 et le lisier s'écoule régulièrement.

Avant le remisage, on pourra utilement rincer les porte-couteaux 301 et les bouches de sortie 210. Pour ce faire, il suffira de brancher une conduite à l'orifice de rinçage 208 sur lequel on aura par exemple fixé un raccord rapide, et d'y faire couler un liquide de rinçage, par exemple de l'eau, de préférence pendant que le rotor 3 est en rotation. On pourra aussi utilement rincer le corps 1 du répartiteur et, le cas échéant, le dégager des saletés et autres corps étrangers y subsistant, en enlevant les écoutilles de service 107, donnant ainsi un large accès au cœur du répartiteur.

La conception du rotor de coupe 3 avec une chambre de liaison 303 unique offre l'avantage d'un volume parfaitement dégagé offrant peu d'obstacles et de recoins dans lesquels les impuretés et corps étrangers peuvent se loger et se coincer.

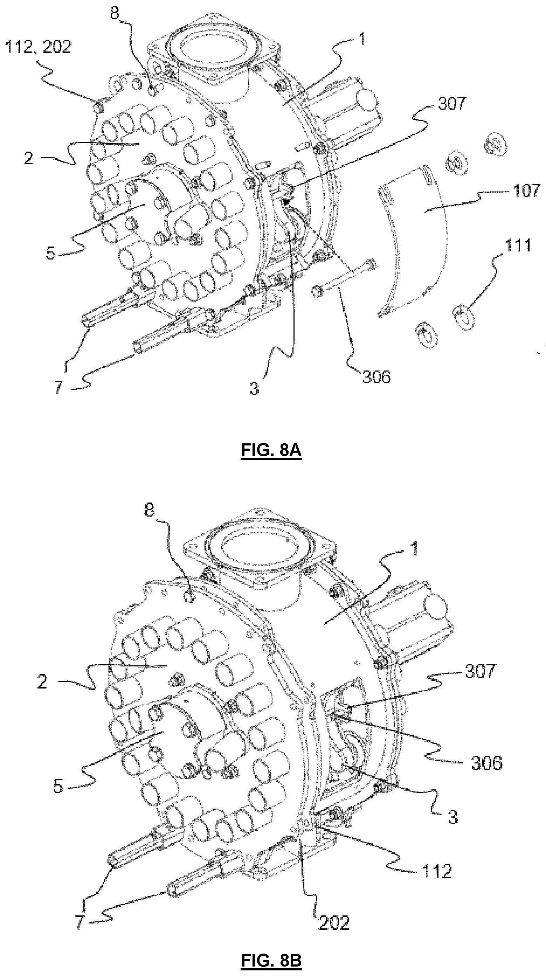

La Figure 8A illustre les premières étapes du processus d'intervention sur les couteaux 309 et les contre-couteaux 4. Après avoir enlevé les plaques d'écoutille 107, il faut d'abord neutraliser la pression d'écartement du ressort du rotor de coupe 3 en enserrant les deux paires de fourchettes de neutralisation 307 au moyen des dispositifs de neutralisation 306, composés dans ce cas chacun d'un ensemble boulon et écrou : on insère simplement le boulon dans la fourchette et on serre l'écrou.

On détache ensuite les assemblages mécaniques liant les orifices de fixation 112 et 202 puis on écarte, par translation axiale, la flasque 2 du corps 1, tel que représenté à la Figure 8B. Des rails de guidage 7 insérés à travers les orifices de guidage 113 et 203 peuvent assister ce mouvement mais ne sont pas indispensables dès lors que des limiteurs d'écartement 8 sont insérés dans les orifices d'écartement 114 et 204. Ces limiteurs, par exemple composés d'un simple ensemble boulon et écrou, sont réglés pour arrêter l'écartement de la flasque 2 à la faible distance de quelques centimètres nécessaire et suffisante pour ménager l'accès de la main ou d'un outil étroit pour y passer l'épaisseur du contre-couteau 4. Il va sans dire que les mêmes opérations permettent d'écarter la flasque 2 opposée. Les flasques de fermeture 2 sont ainsi maintenues par ces limiteurs d'écartement 8 à un faible écart du corps cylindrique 1, pour créer un accès permettant l'insertion ou l'extraction, manuellement ou à l'aide d'un outil étroit, des contre-couteaux 4 et couteaux 309 via ce faible écart sans devoir détacher complètement les flasques de fermeture 2 du corps du répartiteur 1. L'écart maximal entre les flasques 2 et le corps cylindrique 1 correspond nécessairement à la longueur des manchons d'engrenage 302. Il est de préférence constant sur toute la section cylindrique 101 des bases ouvertes, et a généralement une dimension comprise entre 2 et 15 cm, de préférence entre 3 et 8 cm, permettant à l'utilisateur de passer sa main pour accéder aux couteaux et contre-couteaux sans devoir désolidariser et détacher complètement les flasques de fermeture 2 du corps du répartiteur 1, celles-ci pouvant être simplement coulissées de l'écart nécessaire à la maintenance.

La longueur des paliers 5 et des corps des manchons d'engrenage 302 est telle que l'écartement est sans conséquence sur la tenue du rotor de coupe 3. Ce dernier est toujours correctement soutenu.

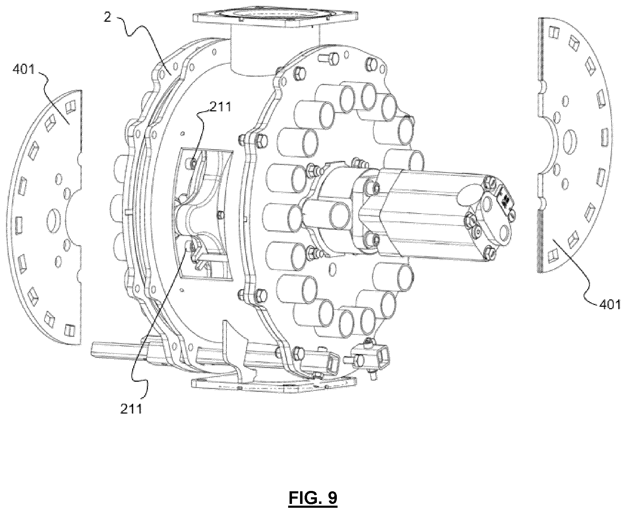

Comme illustré par la Figure 9, retirer les contre-couteaux 4 du répartiteur est alors un jeu d'enfant : il suffit d'écarter, à la main, chaque contre-couteaux 4 des tourillons-guide 211 qui le maintiennent en position avant de le séparer en ses deux demi-disques 401 et d'extraire ensuite ceux-ci via la fente ménagée par l'écartement de la flasque 2.

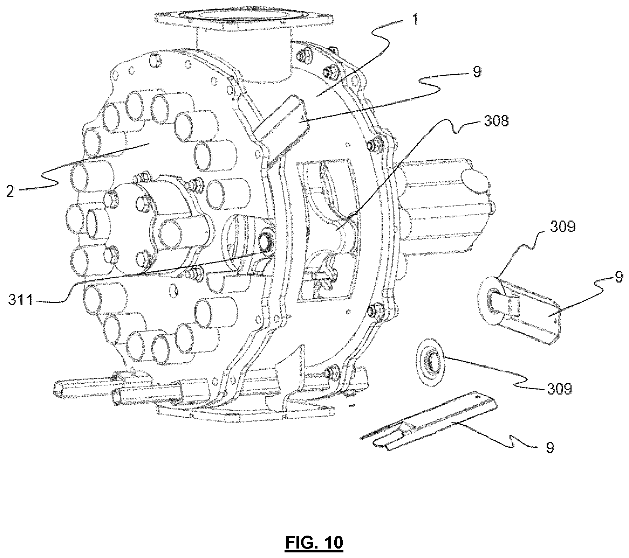

Enfin, comme illustré en Figure 10, on extrait les couteaux circulaires 309 par la même fente ménagée par l'écartement de la flasque 2. Si la place manque pour y passer la main, on s'aidera d'une fourchette de manutention 9 spécialement conçue pour le type de couteaux 309 utilisé. Cette fourchette 9 assurera un maintien suffisant du couteau 309 pour pouvoir l'insérer à travers la fente ménagée par l'écartement de la flasque 2 et pouvoir le caler autour de l'épaulement 311 des branches de l'anneau étoilé 308.

Bien entendu, les opérations inverses permettent de replacer des couteaux 309 et des contre-couteaux 4 dans le répartiteur selon l'invention, et de refermer ce dernier. Avant de replacer les plaques d'écoutilles 107, on aura simplement pris soin d'enlever les dispositifs de neutralisation de pression 306.

Nonobstant le fait que la présente invention a été exposée au moyen d'une description détaillée explicitant une variante d'exécution et différents aspects de l'invention, l'homme de l'art verra que la portée complète de l'invention n'est nullement limitée à l'exemple présenté ici. L'invention est définie par l'étendue de la protection des revendications annexées.

### Liste des symboles de référence

- 1: Corps de répartiteur
- 101: Section cylindrique
- 102: Épaulement
- 103: Bouche d'alimentation
- 104: Socle de fixation
- 105: Orifice de vidange
- 106: Ouverture latérale
- 107: Plaque d'écoutille
- 108: Boulon d'écoutille
- 109: Perçage d'écoutille
- 110: Échancrure de plaque d'écoutille
- 111: Écrou d'écoutille
- 112: Oreille de fixation
- 113: Orifice de guidage
- 114: Orifice d'écartement
- 2: Flasque de fermeture
- 201: Plaque de flasque
- 202: Oreille de fixation
- 203: Orifice de guidage
- 204: Orifice d'écartement
- 205: Orifice central
- 206: Orifice de fixation de palier
- 207: Orifice de fixation de contre-couteaux
- 208: Orifice de rinçage
- 209: Bouche d'admission
- 210: Bouche de sortie
- 211: Tourillon-guide
- 3: Rotor de coupe
- 301: Porte-couteaux
- 302: Manchon d'engrenage
- 303: Chambre de liaison
- 304: Arbre de transmission
- 305: Dispositif de pression (ressort)
- 306: Dispositif de neutralisation de pression
- 307: Fourchette de neutralisation de pression
- 308: Anneau étoilé
- 309: Couteau circulaire
- 310: Capot de répartition
- 311: Épaulement
- 312: Jante
- 4: Contre-couteaux
- 401: Demi-disque
- 402: Tenon
- 403: Mortaise
- 404: Orifice de distribution
- 405: Orifice central du contre-couteau
- 406: Orifice de fixation de palier
- 407: Orifice de fixation de contre-couteaux
- 408: Orifice de rinçage
- 409: Orifice d'admission
- 5: Palier
- 6: Organe de puissance
- 7: Rail de guidage
- 8: Limiteur d'écartement
- 9: Fourchette de manutention

## Revendications

1. Répartiteur de lisier comprenant :
- un corps de répartiteur (1) comprenant une section cylindrique (101) à bases ouvertes;
- deux flasques de fermeture (2) fixées de manière amovible au corps de répartiteur (1) pour fermer ledit corps (1) en obturant les bases de la section cylindrique (101) ;
- un rotor de coupe (3) situé à l'intérieur du corps (1) entre les flasques de fermeture (2), un arbre de transmission (304) et deux porte-couteaux (301) disposés dos à dos, supportant, en utilisation, des couteaux (309) qu'ils compriment sur deux contre-couteaux (4) adossés aux flasques de fermeture (2) à l'intérieur du corps de répartiteur (1);
- un dispositif de pression (305) permettant de repousser, en utilisation, les deux porte-couteaux (301) vers les flasques de fermeture (2) en les écartant l'un de l'autre ;
- un dispositif de neutralisation de pression (306) permettant, lors de son utilisation, de neutraliser le dispositif de pression (305), ledit dispositif de neutralisation étant accueilli dans des ancrages (307) prévus sur les porte-couteaux (301) ;**caractérisé en ce qu'**un ou plusieurs limiteurs d'écartement (8) maintiennent les flasques de fermeture (2), lorsqu'elles sont en position disjointe du corps du répartiteur (1), à un faible écart de quelques centimètres de celui-ci créant un accès aux contre-couteaux (4) et aux couteaux (309) pour les insérer ou les extraire via cet accès sans devoir détacher complètement les flasques de fermeture (2) du corps du répartiteur (1).

2. Répartiteur selon la revendication 1, **caractérisé en ce que** la section cylindrique (101) comprend une, préférablement deux, ouverture(s) latérale(s) (106) couvertes de plaques d'écoutilles (107), permettant d'accéder à l'intérieur du corps de répartiteur (1) pour placer le dispositif de neutralisation de pression (306).

3. Répartiteur selon l'une quelconque des revendications précédentes, **caractérisé en ce que** chaque contre-couteaux (4) est composé de deux demi-disques (401) assemblés l'un à l'autre au moyen d'un assemblage de type amovible sans outil (402 ; 403) de sorte que chaque demi disque (401) peut être inséré dans, respectivement extrait du répartiteur et engagé autour, respectivement dégagé du rotor de coupe (3) via l'accès ménagé entre le corps du répartiteur (1) et les flasques de fermeture (2).

4. Répartiteur selon l'une quelconque des revendications précédentes, **caractérisé en ce que** le porte-couteaux (301) est formé d'un anneau étoilé (308) muni d'un dispositif d'entraînement radial (312) doté d'un orifice central crénelé et dont chaque branche est percée d'un orifice enserré par un épaulement (311) autour duquel un couteau (309) peut s'enficher et tourner librement sur lui-même, d'un capot de répartition (310) épousant la forme de l'anneau (308) et fixé à ce dernier, de sorte que, en utilisation, la substance à répartir s'écoule entre le capot de répartition (310) et l'anneau étoilé (308) vers les orifices de ce dernier.

5. Répartiteur selon l'une quelconque des revendications précédentes, **caractérisé en ce que** le dispositif d'entraînement du rotor de coupe (3) est constitué de deux manchons (302) reliés entre eux par un arbre de transmission (304) s'insérant dans un alésage pratiqué dans la base du manchon (302) et autour duquel est disposé le dispositif de pression (305), les manchons (302) comprenant en outre un épaulement crénelé épousant la forme de l'orifice central des porte-couteaux (301).

6. Répartiteur selon l'une quelconque des revendications précédentes, **caractérisé en ce que** chaque flasque (2201) présente un orifice central (205) sur lequel est apposé un palier (5) pour accueillir les deux extrémités du rotor de coupe (3).

7. Répartiteur selon les revendications 5 et 6, **caractérisé en ce que** le dispositif d'entraînement du rotor de coupe (3) est d'une longueur suffisante pour rester engagé dans ses paliers (5) lorsque les flasques (2) sont en position disjointe du corps de répartiteur (1).

8. Répartiteur selon l'une quelconque des revendications précédentes, **caractérisé en ce que** le dispositif de neutralisation de pression (306) est constitué de deux fixations par vis reliant deux paires de fourchettes (307) de neutralisation de pression agencées sur la périphérie des deux porte-couteaux (301).

9. Répartiteur selon l'une quelconque des revendications précédentes, **caractérisé en ce que** chaque contre-couteaux (4) est percé d'un ou plusieurs orifices de guidage (407) et que chaque flasque de fermeture (2) est munie d'un ou plusieurs détrompeurs (211) correspondants aux orifices de guidage (407) et s'insérant dans ceux-ci.

10. Répartiteur selon l'une quelconque des revendications 4 à 9, **caractérisé en ce que** chaque flasque de fermeture (2) est munie d'une ou plusieurs bouches d'admission de gaz (209) et chaque contre-couteaux (4) est percé d'autant d'orifices d'admission (409) correspondants dirigeant, en utilisation, le gaz dans la partie creuse du porte-couteaux (301), entre l'anneau (308) et l'orifice central.

11. Répartiteur selon l'une quelconque des revendications 4 à 10, **caractérisé en ce que** chaque flasque de fermeture (2) est munie d'un ou plusieurs orifices de rinçage (208) pouvant être muni d'un raccord quelconque et chaque contre-couteaux (4) est percé d'autant d'orifices de rinçage (409) correspondants dirigeant, en utilisation, un flux liquide dans la partie creuse du porte-couteaux (301), entre l'anneau (308) et l'orifice central.

12. Répartiteur selon l'une quelconque des revendications précédentes, **caractérisé en ce qu'**il comprend un dispositif de glissières (7) pour assister le coulissement de chaque flasque (2) de manière indépendante jusqu'à une butée.

13. Répartiteur (1) selon l'une quelconque des revendications précédentes, **caractérisé en ce que** le corps de répartiteur (1) comprend des épaulements (102) sur chacun des bords de la section cylindrique (101), lesdits épaulements (102) débordant substantiellement perpendiculairement par rapport à la section cylindrique (101) et vers l'extérieur de celle-ci, et **caractérisé en ce que** les épaulements (102) de la section cylindrique (101) sont munis d'une pluralité d'orifices de fixation (112) afin de permettre la fixation amovible des flasques de fermeture (2) sur le corps de répartiteur (1), les épaulements (102) comprenant une pluralité d'orifices d'écartement (114) pour recevoir les limiteurs d'écartement (8) réglés pour limiter l'écartement des flasques (2) par rapport au corps (1).

14. Outil d'épandage, **caractérisé en ce qu'**il comprend un répartiteur de lisier selon l'une quelconque des revendications 1 à 13.

15. Procédé de dépose et remplacement d'organes internes tels que le contre-couteau (4) et les couteaux (309) d'un répartiteur de lisier selon l'une ou plusieurs des revendications 1 à 13, consistant à ;
- placer un dispositif de neutralisation de pression (306) entre les ancrages (307) des porte-couteaux (301),
- à comprimer les porte-couteaux (301) pour neutraliser le dispositif de pression (305),
- disjoindre les flasques de fermeture (2) du corps du répartiteur (1), les flasques (2) étant alors maintenues par le ou les limiteurs d'écartement (8) à un faible écart du corps de répartiteur (1) tel que l'accès est ménagé aux organes internes tels que le contre-couteaux (4) et les couteaux (309),
- et enfin, à démonter les couteaux (309) et éventuellement le contre-couteau (4) sans devoir détacher complètement les flasques de fermeture (2) du corps du répartiteur (1).

## Patentansprüche

1. Gülleverteiler, bestehend aus:
- ein Verteilergehäuse (1), das einen zylindrischen Abschnitt (101) mit offenen Enden umfasst;
- zwei Verschlussflansche (2), die abnehmbar am Verteilerkörper (1) befestigt sind, um diesen (1) durch Verschließen der Enden des zylindrischen Abschnitts (101) zu verschließen;
- einen Schneidrotor (3), der sich im Inneren des Gehäuses (1) zwischen den Verschlussflanschen (2) befindet, eine Antriebswelle (304) und zwei Rücken an Rücken angeordnete Messerhalter (301), die im Betrieb Messer (309) tragen, die sie gegen zwei Gegenmesser (4) drücken, die im Inneren des Verteilergehäuses (1) an den Verschlussflanschen (2) anliegen;
- eine Druckvorrichtung (305), mit der im Betrieb die beiden Messerhalter (301) in Richtung der Verschlussflansche (2) gedrückt und dabei voneinander wegbewegt werden können;
- eine Druckneutralisierungsvorrichtung (306), die es bei ihrem Einsatz ermöglicht, die Druckvorrichtung (305) zu neutralisieren, wobei die Druckneutralisierungsvorrichtung in an den Messerhaltern (301) vorgesehenen Verankerungen (307) aufgenommen ist;
**dadurch gekennzeichnet, dass** ein oder mehrere Abstandshalter (8) die Verschlussflansche (2) in einer vom Verteilerkörper (1) getrennten Position in einem geringen Abstand von wenigen Zentimetern zu diesem halten, wodurch ein Zugang zu den Gegenmessern (4) und den Messern (309) geschaffen wird, um diese über diesen Zugang einzusetzen oder zu entnehmen, ohne vollständige Abnahme der Verschlussflansche (2) vom Verteilerkörper (1).

2. Verteiler nach Anspruch 1, **dadurch gekennzeichnet, dass** der zylindrische Abschnitt (101) eine, vorzugsweise zwei, seitliche Öffnung(en) (106) aufweist, die mit Lukendeckeln (107) abgedeckt sind und den Zugang zum Inneren des Verteilerkörpers (1) ermöglichen, um die Druckneutralisierungsvorrichtung (306) anzubringen.

3. Verteiler gemäß einem der vorstehenden Ansprüche, **dadurch gekennzeichnet, dass** jedes Gegenmesser (4) aus zwei Halbscheiben (401) besteht, die mittels einer werkzeuglos lösbaren Verbindung (402; 403) so miteinander verbunden sind, dass jede Halbscheibe (401) über den zwischen dem Verteilerkörper (1) und den Verschlussflanschen (2) vorgesehenen Zugang in den Verteiler eingesetzt bzw. aus diesem entnommen und um den Schneidrotor (3) herum in Eingriff gebracht bzw. von diesem gelöst werden kann.

4. Verteiler nach einem der vorstehenden Ansprüche, **dadurch gekennzeichnet, dass** der Messerhalter (301) aus einem Sternring (308) besteht, der mit einer radialen Antriebsvorrichtung (312) versehen ist, die eine gezackte zentrale Öffnung aufweist, und bei dem jeder Arm mit einer Öffnung versehen ist, die von einer Schulter (311) umschlossen wird, um die sich ein Messer (309) einstecken und sich frei um sich selbst drehen kann, sowie aus einer Verteilerhaube (310), die sich der Form des Rings (308) anpasst und an diesem befestigt ist, sodass im Betrieb die zu verteilende Substanz zwischen der Verteilerhaube (310) und dem Sternring (308) zu dessen Öffnungen hin fließt.

5. Verteiler gemäß einem der vorstehenden Ansprüche, **dadurch gekennzeichnet, dass** die Antriebsvorrichtung für den Schneidrotor (3) aus zwei Hülsen (302) besteht, die durch eine Antriebswelle (304) miteinander verbunden sind, die in eine im Boden der Hülse (302) ausgebildete Bohrung eingreift und um die herum die Druckvorrichtung (305) angeordnet ist, wobei die Hülsen (302) ferner eine Zinnenschulter aufweisen, die der Form der zentralen Öffnung der Messerhalter (301) entspricht.

6. Verteiler gemäß einem der vorstehenden Ansprüche, **dadurch gekennzeichnet, dass** jeder Flansch (2201) eine zentrale Öffnung (205) aufweist, an der ein Lager (5) zur Aufnahme der beiden Enden des Schneidrotor (3) angebracht ist.

7. Verteiler gemäß den Ansprüchen 5 und 6, **dadurch gekennzeichnet, dass** der Antrieb des Schneidrotor (3) eine ausreichende Länge aufweist, um in seinen Lagern (5) in Eingriff zu bleiben, wenn sich die Flansche (2) in einer vom Verteilerkörper (1) getrennten Position befinden.

8. Verteiler gemäß einem der vorstehenden Ansprüche, **dadurch gekennzeichnet, dass** die Druckneutralisierungsvorrichtung (306) aus zwei Schraubbefestigungen besteht, die zwei Paare von Druckneutralisierungsgabeln (307) verbinden, die am Umfang der beiden Messerhalter (301) angeordnet sind.

9. Verteiler gemäß einem der vorstehenden Ansprüche, **dadurch gekennzeichnet, dass** jedes Gegenmesser (4) mit einer oder mehreren Führungsbohrungen (407) versehen ist und dass jeder Verschlussflansch (2) mit einem oder mehreren Passstiften (211) ausgestattet ist, die den Führungsöffnungen (407) entsprechen und in diese eingreifen.

10. Verteiler nach einem der Ansprüche 4 bis 9, **dadurch gekennzeichnet, dass** jeder Verschlussflansch (2) mit einer oder mehreren Gaseinlassöffnungen (209) versehen ist und jedes Gegenmesser (4) mit ebenso vielen entsprechenden Einlassöffnungen (409) durchbohrt ist, die im Betrieb das Gas in den Hohlraum des Messerträgers (301) zwischen dem Ring (308) und der zentralen Öffnung leiten.

11. Verteiler gemäß einem der Ansprüche 4 bis 10, **dadurch gekennzeichnet, dass** jeder Verschlussflansch (2) mit einer oder mehreren Spülöffnungen (208) versehen ist, die mit einem beliebigen Anschlussstück ausgestattet werden können, und jedes Gegenmesser (4) mit ebenso vielen entsprechenden Spülöffnungen (409) durchbohrt ist, die im Betrieb einen Flüssigkeitsstrom in den Hohlraum des Messerhalters (301) zwischen dem Ring (308) und der zentralen Öffnung leiten.

12. Verteiler gemäß einem der vorstehenden Ansprüche, **dadurch gekennzeichnet, dass** er eine Schienenvorrichtung (7) umfasst, um das Gleiten jedes Flansches (2) unabhängig bis zu einem Anschlag zu unterstützen.

13. Verteiler gemäß einem der vorstehenden Ansprüche, **dadurch gekennzeichnet, dass** der Verteilerkörper (1) an jedem der Ränder des zylindrischen Abschnitts (101) Schultern (102) aufweist, wobei die genannten Schultern (102) im Wesentlichen senkrecht zum zylindrischen Abschnitt (101) und nach außen von diesem vorstehen, und **dadurch gekennzeichnet, dass** die Schultern (102) des zylindrischen Abschnitts (101) mit einer Vielzahl von Befestigungsöffnungen (112) versehen sind, um die lösbare Befestigung der Verschlussflansche (2) am Verteilerkörper (1) zu ermöglichen, wobei die Schultern (102) eine Vielzahl von Abstandshalteröffnungen (114) zur Aufnahme der Abstandsbegrenzer (8) umfassen, die so eingestellt sind, dass sie den Abstand der Verschlussflansche (2) zum Verteilerkörper (1) begrenzen.

14. Ausbringgerät, **dadurch gekennzeichnet, dass** es einen Gülleverteiler gemäß einem der Ansprüche 1 bis 13 umfasst.

15. Verfahren zum Ausbau und Austausch von Innenteilen wie dem Gegenmesser (4) und den Messern (309) eines Gülleverteilers gemäß einem oder mehreren der Ansprüche 1 bis 13, bestehend aus:
- eine Druckneutralisierungsvorrichtung (306) zwischen den Verankerungen (307) der Messerhalter (301) anzubringen,
- die Messerhalter (301) zusammenzudrücken, um die Druckvorrichtung (305) zu neutralisieren,
- die Verschlussflansche (2) vom Verteilerkörper (1) zu trennen, wobei die Flansche (2) dann durch den oder die Abstandsbegrenzer (8) in einem geringen Abstand zum Verteilerkörper (1) gehalten werden, sodass der Zugang zu den inneren Bauteilen wie den Gegenmessern (4) und den Messern (309) gewährleistet ist,
- und schließlich die Messer (309) und gegebenenfalls das Gegenmesser (4) zu demontieren, ohne die Verschlussflansche (2) vollständig vom Verteilerkörper (1) abnehmen zu müssen.

## Claims

1. A slurry distributor comprising :
- a distributor body (1) comprising a cylindrical section (101) with open bases;
- two closing flanges (2) detachably secured to the distributor body (1) to close said body (1) by sealedly covering the ends of the cylindrical section (101);
- a cutting rotor (3) located inside the body (1) between the closing flanges (2), a drive shaft (304) and two back-to-back arranged blade holders (301), which, in use, support blades (309) that they press against two counter-blades (4) abutting the closing flanges (2) inside the distributor body (1);
- a pressure device (305) designed to push, during use, the two blade holders (301) towards the closing flanges (2), thereby moving them apart from one another;
- a pressure neutralising device (306) allowing, in use, the compressing device (305) to be neutralised, said neutralising device being housed in anchors (307) provided on the blade holders (301);
**characterised in that** one or more spacer limiters (8) hold the closing flanges (2), when they are in a position spaced apart from the distributor body (1), at a small distance of a few centimetres from it, thereby providing access to the counter-blades (4) and the blades (309) so that they can be inserted or extracted via this access without having to completely detach the closure flanges (2) from the distributor body (1).

2. A distributor according to claim 1, **characterised in that** the cylindrical section (101) comprises one, preferably two, side opening(s) (106) covered by hatch plates (107), allowing access to the inside of the distributor body (1) in order to install the pressure neutralisation device (306).

3. A distributor according to any one of the preceding claims, **characterised in that** each counter-blade (4) comprises two half-discs (401) assembled to one another by means of a tool-free, detachable assembly (402, 403) so that each half-disc (401) can be inserted into, respectively extracted from, the distributor and engaged around, respectively disengaged from, the cutting rotor (3) via the access provided between the distributor body (1) and the closing flanges (2).

4. A distributor according to any one of the preceding claims, **characterised in that** the blade holder (301) is formed by a star-shaped ring (308) fitted with a radial drive mechanism (312) which has a serrated central hole and of which each arm is pierced by an opening flanked by a shoulder (311) around which a blade (309) can be plugged and rotate freely about its own axis, and a distribution cover (310) which matches the shape of the ring (308) and is secured to it, so that, in use, the substance to be distributed flows between the distribution cover (310) and the star-shaped ring (308) towards the openings in the latter.

5. A distributor according to any one of the preceding claims, **characterised in that** the drive mechanism for the cutting rotor (3) comprises two sleeves (302) connected to one another by a drive shaft (304) which fits into a bore in the base of the sleeve (302) and around which the compressing device (305) is arranged, the sleeves (302) further comprising a serrated shoulder matching the shape of the central opening of the blade holders (301).

6. A distributor according to any one of the preceding claims, **characterised in that** each flange (2201) has a central hole (205) to which a bearing (5) is fitted to accommodate both ends of the cutting rotor (3).

7. A distributor according to claims 5 and 6, **characterised in that** the drive mechanism for the cutting rotor (3) is of sufficient length to remain engaged in its bearings (5) when the flanges (2) are in a position spaced apart from the distributor body (1).

8. A distributor according to any one of the preceding claims, **characterised in that** the pressure neutralisation device (306) comprises two screw fastenings connecting two pairs of pressure neutralisation forks (307) arranged on the periphery of the two blade holders (301).

9. A distributor according to any one of the preceding claims, **characterised in that** each counter-blade (4) is provided with one or more guide holes (407) and that each closing flange (2) is provided with one or more keying features (211) corresponding to the guide holes (407) and plugging into them.

10. A distributor according to any one of claims 4 to 9, **characterised in that** each closing flange (2) is provided with one or more gas inlet ports (209) and that each counter-blade (4) is pierced with a corresponding number of inlet holes (409) which, in use, direct the gas into the hollow part of the blade holder (301), between the ring (308) and the central opening.

11. A distributor according to any one of claims 4 to 10, **characterised in that** each closing flange (2) is provided with one or more flushing holes (208) which may be fitted with any type of connector, and that each counter-blade (4) is pierced with a corresponding number of flushing holes (409) which, in use, direct a flow of liquid into the hollow portion of the blade holder (301), between the ring (308) and the central opening.

12. A distributor according to any one of the preceding claims, **characterised in that** it comprises a guide rail device (7) to assist the independent sliding of each flange (2) up to a stop.

13. A distributor according to any one of the preceding claims, **characterised in that** the distributor body (1) comprises shoulders (102) on each of the edges of the cylindrical section (101), said shoulders (102) projecting substantially perpendicularly from the cylindrical section (101) and outwards therefrom, and **characterised in that** the shoulders (102) of the cylindrical section (101) are provided with a plurality of fixing holes (112) to enable the removable attachment of the closing flanges (2) to the distributor body (1), the shoulders (102) comprising a plurality of spacing holes (114) for receiving the spacing limiters (8) set to limit the spacing of the flanges (2) relative to the body (1).

14. A spreading implement, **characterised in that** it comprises a slurry distributor as defined in any one of claims 1 to 13.

15. A method for removing and replacing internal components such as the counter-blade (4) and the blades (309) of a slurry distributor according to one or more of claims 1 to 13, consisting of:
- positioning a pressure neutralisation device (306) between the anchor points (307) of the blade holders (301),
- compressing the blade holders (301) to neutralize the compressing device (305),
- spacing the closing flanges (2) away from the distributor body (1), the flanges (2) then being held by the spacing limiter(s) (8) at a small distance from the distributor body (1) such that access is provided to internal components such as the counter-blades (4) and the blades (309),
- and finally, removing the blades (309) and, if necessary, the counter-blade (4) without having to completely detach the closing flanges (2) from the distributor body (1).
